# EUROPÄISCHE PATENTSCHRIFT

(11) **EP 4 212 826 B1**
(45) Veröffentlichungstag und Bekanntmachung des Hinweises auf die Patenterteilung: **09.07.2025**
(21) Anmeldenummer: 22151515.8
(22) Anmeldetag: 14.01.2022
(51) Int. Cl.: G01F 15/063, G01D 21/00, G01D 1/00, G01F 23/80, H04Q 9/00, G01L 19/08

(54) **SCHLEPPZEIGER ZUM BERECHNEN EINER PROZESSMESSGRÖSSE**
SLAVE POINTER FOR CALCULATING A PROCESS VARIABLE
INDEX MOBILE PERMETTANT DE CALCULER UNE GRANDEUR À MESURER DE PROCESSUS

(43) Veröffentlichungstag der Anmeldung: 19.07.2023
(73) Patentinhaber: VEGA Grieshaber KG, 77709 Wolfach (DE)
(72) Erfinder: KECH, Günter, 77709 Wolfach (DE)
(74) Vertreter: Maiwald GmbH

(56) Entgegenhaltungen:
- EP-B1- 3 517 902
- US-A1- 2010 141 423
- US-B1- 9 642 086

## Beschreibung

### Gebiet der Erfindung

Die Erfindung betrifft die Prozessmesstechnik. Insbesondere betrifft die Erfindung einen Schleppzeiger, der eingerichtet ist zum Berechnen einer Prozessmessgröße, ein Messgerät mit einem solchen Schleppzeiger, eine Messgeräte-externe Anzeige- und/oder Auswerteeinheit, aufweisend einen derartigen Schleppzeiger, ein Verfahren zum Berechnen einer Prozessmessgröße, ein Programmelement und ein computerlesbares Medium.

### Technischer Hintergrund

In der modernen Prozessmesstechnik und insbesondere bei der Verwendung autarker, nicht-kabelgebundener Messgeräte ist die Energieversorgung oft begrenzt. Somit gilt es, einen Kompromiss zwischen einerseits einer hohen Messgenauigkeit und andererseits einem möglichst geringen Energieverbrauch zu finden. So kann die Messgenauigkeit beispielsweise dadurch erhöht werden, indem möglichst viele Einzelmessungen stattfinden, was jedoch mit einem relativ hohen Energieverbrauch einhergeht. Der Energieverbrauch kann auf der anderen Seite gesenkt werden, indem seltener gemessen wird.

EP 3 517 902 B1 beschreibt ein Verfahren zum Bestimmen und Anzeigen einer verbleibenden Befüll- oder Entleerzeit eines Behältnisses.

US 9,642,086 B1 beschreibt ein Verfahren und ein System zur Reduzierung des Stromverbrauchs in über ein Netzwerk miteinander verbundenen Messeinheiten unter Verwendung einer Vorhersage.

US 2010/0141423 A1 beschreibt ein drahtloses Sensornetzwerk und ein entsprechendes Datenerfassungsverfahren.

### Zusammenfassung der Erfindung

Es ist eine Aufgabe der vorliegenden Erfindung, die Genauigkeit bei der Ausgabe von Werten von Prozessmessgrößen zu erhöhen.

Diese Aufgabe wird durch die Merkmale der unabhängigen Patentansprüche gelöst.

Weiterbildungen der Erfindung ergeben sich aus den abhängigen Ansprüchen.

Ein erster Aspekt der Erfindung betrifft eine Messgeräteexterne Anzeige- und Auswerteeinheit gemäß Anspruch 1, bei der es sich um einen mobilen PC, ein Tablet, ein Smartphone oder ein Wearable handelt, die einen Schleppzeiger aufweist, eingerichtet zum Berechnen einer Prozessmessgröße. Bei dem Schleppzeiger handelt es sich um eine Steuereinheit, die außerhalb des eigentlichen Messgeräts angeordnet ist. So kann sie beispielsweise in einem Mobiltelefon oder einer anderweitigen Einrichtung eines Benutzers angeordnet sein.

Der Schleppzeiger weist eine Recheneinheit auf, die eingerichtet ist zum näherungsweisen Berechnen einer vergangenen zeitlichen Entwicklung des Wertes der Prozessmessgröße aus Prozessmessdaten eines Messgeräts, sowie zum Berechnen des aktuellen Wertes der Prozessmessgröße aus der vergangenen zeitlichen (berechneten) Entwicklung.

Die Recheneinheit ist eingerichtet, den berechneten aktuellen Wert der Prozessmessgröße mit einem aktuellen Wert der Prozessmessgröße zu vergleichen, der auf aktuelle Prozessmessdaten zurückzuführen ist. Die Recheneinheit ist eingerichtet, das Messgerät anzuweisen, Prozessmessdaten an einen externen Empfänger mittels energiesparender Weitbereichskommunikation oder Nahbereichskommunikation zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht. Die Recheneinheit ist eingerichtet, das Messgerät nicht anzuweisen, Prozessmessdaten an den externen Empfänger zu übertragen, wenn der berechnete aktuelle Wert der Prozessmessgröße von dem aktuellen Wert der Prozessmessgröße, der auf die aktuellen Prozessmessdaten zurückzuführen ist, weniger als einen vorbestimmten Schwellwert abweicht.

Unter dem Wert der Prozessmessgröße ist hierbei beispielsweise ein Füllstand, ein Druck oder ein Durchfluss zu verstehen. Unter Prozessmessdaten sind die eigentlichen Messdaten zu verstehen, die das Messgerät erfasst, und welche dann in den Wert der Prozessmessgröße umgerechnet werden.

In anderen Worten ist die Recheneinheit eingerichtet, aus den vergangenen Prozessmessdaten des Messgeräts die zeitliche Entwicklung des Messwertes (also beispielsweise des Füllstands, des Drucks oder des Durchflusses) näherungsweise zu berechnen. Im Regelfall wird sich hier ein glatter, kontinuierlicher zeitlicher Verlauf ergeben, und keine stufenförmiger Verlauf, der durch einzelne Messpunkte definiert wird. Aus diesem zeitlichen Verlauf kann die Recheneinheit dann den aktuellen Wert der Prozessmessgröße berechnen. Hierbei handelt es sich um eine Prognose, Vorhersage bzw. Abschätzung.

Das näherungsweise Berechnen der vergangenen zeitlichen Entwicklung des Wertes der Prozessmessgröße umfasst beispielsweise das Erkennen eines Prozessmessgrößen-Musters oder Trends. So kann die Recheneinheit beispielsweise erkennen, dass ein Füllstand kontinuierlich und linear ansteigt, weil der Behälter mit konstanter Füllrate befüllt wird. Ebenso kann sie erkennen, wenn der Behälter kontinuierlich und mit konstanter Rate entleert wird. Auch dann wird sie eine Gerade generieren, diesmal jedoch mit negativer Steigung.

Gemäß der Erfindung ist die Recheneinheit eingerichtet, den berechneten aktuellen Wert der Prozessmessgröße mit einem aktuellen Wert der Prozessmessgröße zu vergleichen, der auf aktuelle Prozessmessdaten zurückzuführen ist.

In anderen Worten vergleicht die Recheneinheit den (theoretischen, vorhergesagten) berechneten Messwert mit einem tatsächlich gemessenen Messwert.

Gemäß der Erfindung ist die Recheneinheit eingerichtet, das Messgerät anzuweisen, Prozessmessdaten an einen externen Empfänger zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht.

Das Messgerät überträgt also nur dann neue, aktuelle Prozessmessdaten an den externen Empfänger, wenn der zuletzt gemessene Messwert deutlich von dem berechneten Messwert abweicht, der Schleppzeiger also "aus dem Ruder läuft". Ein solcher Fall kann beispielsweise dann eintreten, wenn der Behälter zunächst befüllt und dieser Füllvorgang dann beendet wurde. Der Schleppzeiger würde in diesem Falle weiter "nach oben" laufen und somit anzeigen, dass der Füllstand weiter ansteigt. Stellt sich dann durch eine neue Messung heraus, dass dies nicht der Fall ist, sondern sich der Füllstand vielmehr nicht mehr ändert, wird ein neuer Messwert (Prozessmessdaten) an den externen Empfänger übertragen.

Gemäß der Erfindung ist die Recheneinheit eingerichtet, das Messgerät nicht anzuweisen, Prozessmessdaten an den externen Empfänger zu übertragen, wenn der berechnete aktuelle Wert der Prozessmessgröße von dem aktuellen Wert der Prozessmessgröße, der auf die aktuellen Prozessmessdaten zurückzuführen ist, weniger als den vorbestimmten Schwellwert abweicht.

Stellt sich also heraus, dass der Schleppzeiger weiterhin eine gute Prognose des Füllstands liefert, wird kein neuer Messwert übertragen.

Durch all dies wird erreicht, dass ein Messwert nur dann übertragen wird, wenn dies auch zum Nachregeln des Schleppzeigers erforderlich ist. Liefert der Schleppzeiger hingegen kontinuierlich gute Schätzwerte für die Messwerte, werden keine neuen, aktuellen Messwerte übertragen.

Gemäß einer weiteren Ausführungsform umfasst das näherungsweise Berechnen der vergangenen zeitlichen Entwicklung des Wertes der Prozessmessgröße das Erzeugen einer mathematischen oder grafischen Beschreibung der vergangenen zeitlichen Entwicklung. Durch eine solche Beschreibung der vergangenen zeitlichen Entwicklung ist es auf einfache Weise möglich, Prognosen für die Zukunft zu treffen bzw. aktuelle Messwerte abzuschätzen.

Gemäß der Erfindung ist der Schleppzeiger in einem Endgerät eines Benutzers implementiert.

Beispielsweise ist der Schleppzeiger eingerichtet, die Prozessmessdaten von dem Messgerät drahtlos zu empfangen.

Gemäß einer weiteren Ausführungsform handelt es sich bei der Prozessmessgröße um einen Füllstand eines Behälters oder um ein Volumen eines Füllguts in einem Behälter. Gemäß einer weiteren Ausführungsform handelt es sich bei den Prozessmessdaten um Füllstandmessdaten eines Füllstandmessgeräts.

Beispielsweise betrifft ein Messgerät, beispielsweise ein Füllstandmessgerät, einen Grenzstandsensor, ein Druckmessgerät oder ein Durchflussmessgerät, das einen oben und im Folgenden beschriebenen Schleppzeiger aufweist.

Gemäß einem weiteren Aspekt der vorliegenden Erfindung gemäß Anspruch 6 ist ein Messgerät und eine Messgeräte-externe Anzeige- und/oder Auswerteeinheit angegeben, die einen oben und im Folgenden beschriebenen Schleppzeiger aufweist.

Ein weiterer Aspekt der vorliegenden Erfindung betrifft ein Verfahren gemäß Anspruch 7 zum Berechnen einer Prozessmessgröße mit einer messgerätexternen Anzeige- und/oder Auswerteeinheit, bei dem zunächst ein näherungsweises Berechnen einer vergangenen zeitlichen Entwicklung des Wertes der Prozessmessgröße aus Prozessmessdaten eines Messgeräts erfolgt. Daraufhin erfolgt ein Berechnen des aktuellen Wertes der Prozessmessgröße aus der vergangenen, berechneten zeitlichen Entwicklung. Der berechnete aktuelle Wert der Prozessmessgröße ist mit einem aktuellen Wert der Prozessmessgröße verglichen, der auf aktuelle Prozessmessdaten zurückzuführen ist. Das Verfahren umfasst einen weiteren Schritt vom Anweisen des Messgerätes durch die Recheneinheit mittels energiesparender Weitbereichskommunikation oder Nahbereichskommunikation, Prozessmessdaten an einen externen Empfänger zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht. Die Recheneinheit ist eingerichtet, das Messgerät nicht anzuweisen, Prozessmessdaten an einen externen Empfänger zu übertragen, wenn der berechnete aktuelle Wert der Prozessmessgröße von dem aktuellen Wert der Prozessmessgröße, der auf die aktuellen Prozessmessdaten zurückzuführen ist, weniger als einen vorbestimmten Schwellwert abweicht.

Ein weiterer Aspekt der vorliegenden Erfindung betrifft ein Programmelement gemäß Anspruch 8, das, wenn es auf der Recheneinheit der oben beschriebenen messgeräteexternen Anzeige- und/oder Auswerteeinheit ausgeführt wird, die Recheneinheit anweist, die oben beschriebenen Schritte durchzuführen.

Ein weiterer Aspekt der vorliegenden Erfindung betrifft ein computerlesbares Medium gemäß Anspruch 9, auf dem ein oben beschriebenes Programmelement gespeichert ist.

Im Folgenden werden mit Verweis auf die Figuren weitere Ausführungsformen der vorliegenden Offenbarung beschrieben. Werden in der folgenden Figurenbeschreibung die gleichen Bezugszeichen verwendet, so bezeichnen diese gleichen oder ähnlichen Elemente. Die Darstellungen in den Figuren sind schematisch und nicht maßstäblich.
Fig. 1 zeigt Messintervalle zweier Sensoren.
Fig. 2 zeigt Messintervalle zweier Sensoren.
Fig. 3 zeigt einen zeitlichen Füllstandverlauf.
Fig. 4 zeigt Füllstandmesswerte für den in Fig. 3 gezeigten zeitlichen Verlauf.
Fig. 5 zeigt den zeitlichen Verlauf von Sensormesswerten sowie eine näherungsweise berechnete zeitliche Entwicklung auf diesen Messwerten.
Fig. 6 zeigt ein Messsystem gemäß einer Ausführungsform.
Fig. 7 zeigt eine weitere Darstellung eines Messsystems.
Fig. 8 zeigt ein Flussdiagramm eines Verfahrens gemäß einer Ausführungsform.

### Detaillierte Beschreibung von Ausführungsformen

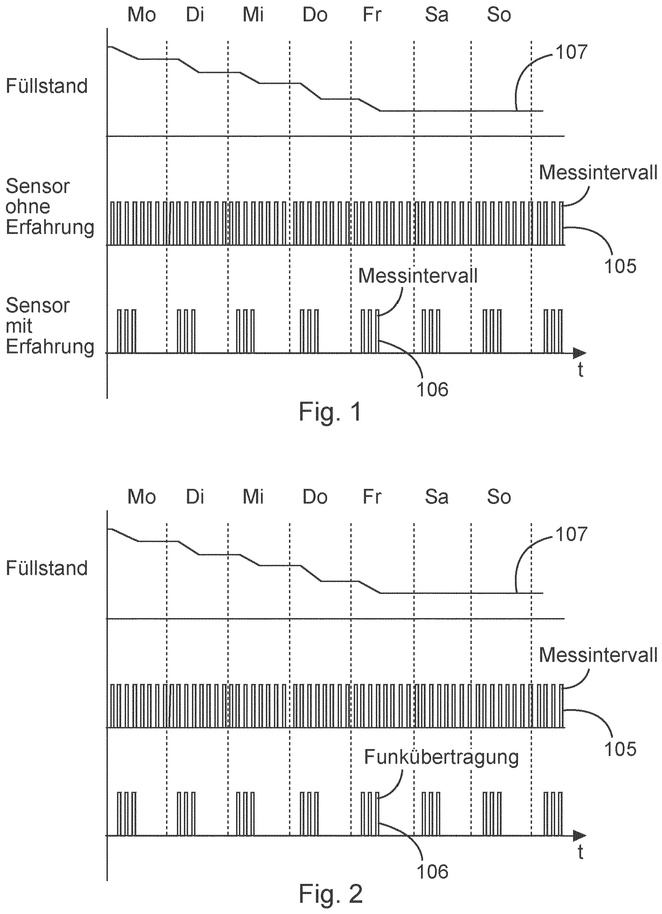

Fig. 1 zeigt ein Diagramm, in dem der zeitliche Verlauf 107 eines Füllstands über eine Woche zu sehen ist. Während der Arbeitswoche Montag bis Freitag sinkt der Füllstand schrittweise und bleibt samstags und sonntags konstant.

Bezugszeichen 105 zeigt den zeitlichen Verlauf von Messintervallen eines Messgeräts (Sensors) ohne Erfahrung. Die Messintervalle weisen einen konstanten zeitlichen Abstand auf, unabhängig davon, ob sich der Füllstand ändert oder nicht.

Bezugszeichen 106 hingegen zeigt die zeitliche Verteilung von Messintervallen eines selbstlernenden Sensors, der bereits Erfahrungen gesammelt hat. Der selbstlernende Sensor ist intelligent genug, um zu ermitteln, wann die nächste Messung erfolgen soll. Somit kann er durch den entsprechenden Verzicht auf Messungen Energie sparen.

Misst der Sensor eine Messwertänderung jedoch nicht, da der Abstand benachbarter Messintervalle erhöht wurde, können schnelle Füllstandänderungen mitunter erst spät erkannt werden.

Fig. 2 zeigt ein ähnliches Diagramm, wie Fig. 1, diesmal im Hinblick auf die Funkübertragung. Bezugszeichen 107 zeigt wieder den tatsächlichen Verlauf des Füllstands und Bezugszeichen 105 die Messintervalle. Bezugszeichen 106 zeigt die Phasen der Übertragung der Messwerte (Funkübertragung). Der Energiebedarf zur Funkübertragung der Messwerte ist erheblich und beansprucht die Energie eines autarken Sensors stark. Das Funkmodul kann nun so programmiert werden, dass es in Abhängigkeit der Messwerte, also beispielsweise in Abhängigkeit von Messwertänderungen, zur Funkübertragung aktiviert wird. Mit dieser Technik ist es möglich, in regelmäßigen Abständen den Füllstand zu messen. Allerdings wird nur bei wesentlichen Veränderungen der Messwert in z. B. die Cloud übermittelt.

Benutzer, die aus der Ferne den Messwert ablesen möchten, erhalten während der Zeiträume, in denen nicht gemessen wird oder keine Funkübertragung stattfindet, keine Informationen über Füllstandänderungen. Demzufolge kann es zu einem großen Unterschied zwischen dem extern angezeigten Füllstand und dem tatsächlichen Füllstand kommen.

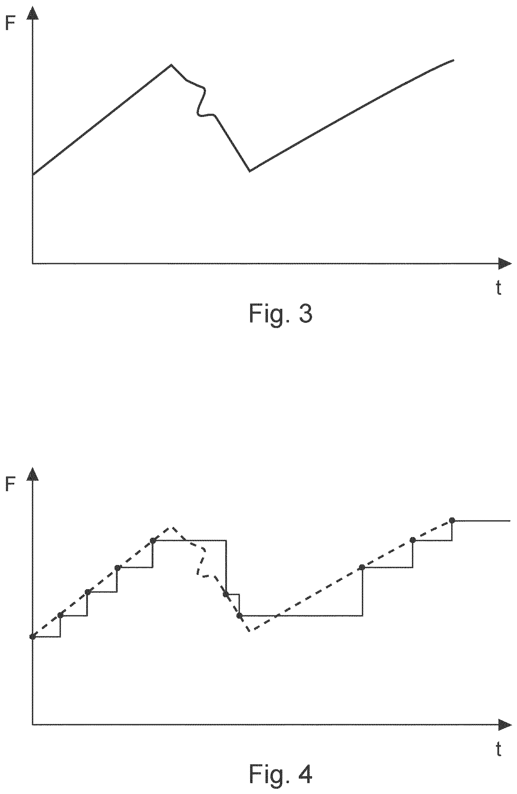

Fig. 3 und 4 sollen darstellen, wie der Messwert in der Cloud oder auf einem anderweitigen Messgerät der externen Speicher stufenförmig gespeichert werden kann.

Fig. 3 zeigt hierbei den tatsächlichen Verlauf des Füllstands über die Zeit. Der Füllstand steigt zunächst linear an und sinkt daraufhin wieder. Dann steigt er wieder linear an.

Fig. 4 zeigt die erfassten Messwerte, die vom Messgerät in die Cloud übertragen werden können. Da diese Messwerte nur zu bestimmten Zeiten erfasst werden, ergibt sich ein stufenförmiger Verlauf der Füllstandmesskurve. Da also der Messwert dem Nutzer direkt aus der Cloud angezeigt wird, erhält der Nutzer diesen ebenfalls stufenförmig mit der entsprechenden Abweichung zum tatsächlichen Wert. Diese Abweichung kann nur durch eine Erhöhung der Messrate oder eine Erhöhung der Funkübertragungsrate verringert werden.

Die Abweichung kann aber auch dadurch verringert werden, indem im Messgerät, im zentralen Speicher (Cloud) oder, gemäß der Erfindung,

im Endgerät des Benutzers, ein Füllstand-Muster oder ein Trend erkannt wird. Ein solches Füllstand-Muster kann z. B. eine bestimmte Steigung einer Messkurve sein (auch ein unveränderter Messwert enthält eine Steigung 0). Die externe Recheneinheit im zentralen Speicher folgt hierbei zeitnah dem erkannten Füllstand-Muster (Prozessmessgrößen-Muster oder Trend) und steigert dadurch die Anzeigegenauigkeit beim Benutzer.

Mit diesem Verfahren ist es möglich, die Funkrate zu reduzieren, wobei dennoch die angezeigte Messgenauigkeit gesteigert wird.

Somit ist es möglich, Sensorenergie einzusparen, da die Funkübertragungsrate reduziert werden kann, ohne dass sich der angezeigte Messwert und der tatsächliche Füllstand stark voneinander entfernen. Insbesondere kann das Messgerät eingerichtet sein, Messdaten nur dann zu senden, wenn der Wert der Prozessmessgröße aus der Toleranz herausläuft, sich also zu weit von dem prognostizierten Wert ("berechneter aktueller Wert der Prozessmessgröße") entfernt.

Der Schleppzeiger weist einen intelligenten Messwertspeicher auf, der aus den vergangenen historischen Daten zum aktuellen Zeitpunkt möglichst genau den Messwert anhand des vorherigen Füllstand-Musters und/oder der Zeit (Tageszeit/Wochentag) und/oder Wetterdaten prognostiziert bzw. hochrechnet. Beispielsweise wird also in der Cloud ein (tages-)zeitüblicher Messwertverlauf angezeigt. Die Anzeige folgt in der Cloud einem Schleppzeiger, welcher aus historischen Daten gelernt hat, wie sich der Verlauf entwickeln kann. Um Energie von z. B. batteriebetriebenen Sensoren einzusparen, wird nur vom Sensor ein Messwert übertragen, wenn der Messwert vom erwarteten Wert deutlich abweicht.

Der Sensor überträgt die Messwerte über eine Funkverbindung, sobald sich der Messwert außerhalb eines Toleranzbandes befindet.

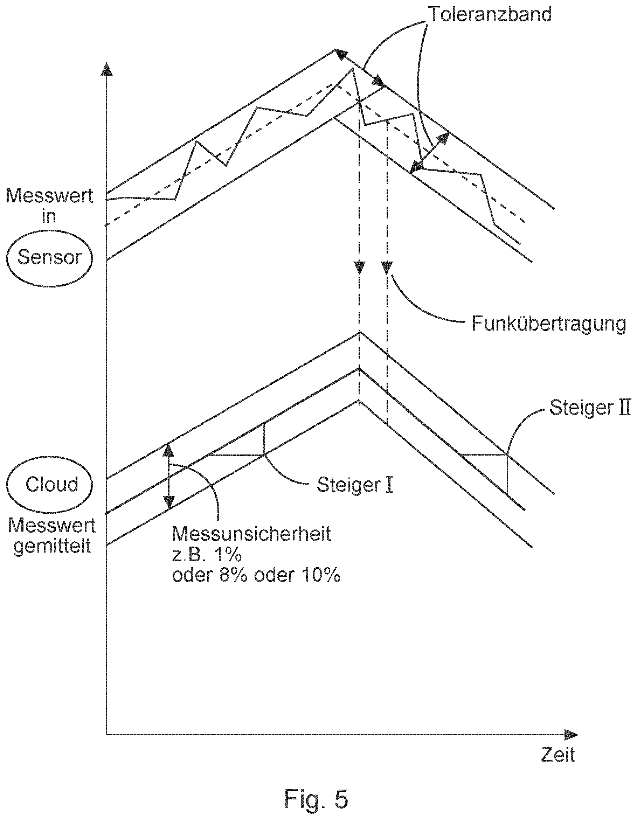

So zeigt Fig. 5 einen Messwertverlauf, wie er im Messgerät ermittelt wird. Der Sensor legt durch die Messpunkte eine Kurve (in diesem Fall eine gezackte Kurve, da die Messwerte nicht auf einer gemeinsamen Geraden liegen) und mittelt die Messwerte entsprechend (siehe gestrichelte Kurve). Über diese Mittelung wird ein Toleranzband gelegt. Weicht nun ein Messwert so weit von der Mittelung ab, dass ein vorbestimmter Toleranzbereich von z. B. 1 % oder 5 % oder in unkritischen Anlagen 10 bis 25 % erlassen wird, wird eine Funkübertragung des Messwerts an die Cloud veranlasst. Die Cloud ist in einem Beispiel das VEGA Inventory System (VIS). Unter Funkübertragung ist eine energiesparende Weitbereichskommunikation, wie LoRa oder NB-IoT, zu verstehen. Auch kann Nahbereichskommunikation eingesetzt werden, insbesondere innerhalb eines Industriestandorts, wie Bluetooth oder WLAN. Auch kann die Übertragung mittels WirelessHART erfolgen.

In der Cloud, oder, gemäß der Erfindung, in einem Endgerät, wird der letzte empfangene Messwert mit den historischen Messdaten verglichen. Die Cloud oder, gemäß der Erfindung, ein Endgerät ist mit diesen Daten in der Lage, ein Muster zu erkennen und passt selbst die Mittelung des Messwertes und die dazugehörigen Messunsicherheiten an. Dies ist im unteren Teil der Fig. 5 zu sehen.

Mit dem vorbestimmten Füllstand-Muster ist nun die Cloud in der Lage, den zukünftigen Messwertverlauf zu bestimmen und diesen in der Zeit zwischen dem letzten übertragenen Messwert und dem nächsten übertragenen Messwert anzunähern. Hierzu kann beispielsweise eine konstante Steigung in der Messwertkurve als ein Kennwert herangezogen werden. Auch ist es möglich, die Tageszeit, den Wochentag, eine Ventilstellung oder auch Wetterdaten als Kennwerte heranzuziehen. Es sind viele Kennwerte möglich, wobei hier nur ein Auszug der vielen Möglichkeiten genannt ist. Der Toleranzbereich und die Messunsicherheit können vom Hersteller vorgegeben sein. Es ist allerdings auch möglich, dass diese vom Kunden eingestellt werden können. Eine selbstlernende Einstellung ist ebenfalls möglich, sofern genügend Daten vorliegen.

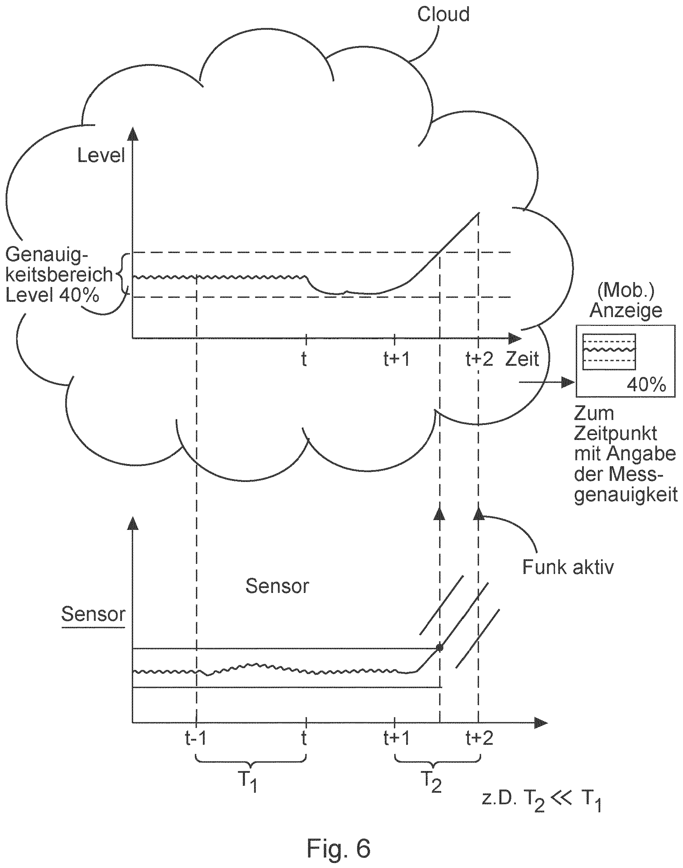

In Fig. 6 ist ein Messsystem dargestellt, das nicht in den Schutzbereich der Ansprüche fällt, welches das oben beschriebene Verfahren

implementiert hat. Im unteren Bereich der Fig. 6 ist die Messkurve eines Füllstandsensors über die Zeit dargestellt.

Dieser Füllstandsensor arbeitet autark und ist daher batteriebetrieben und sendet die Messwerte über Funk an einen übergeordneten Zentralrechner. Dieser übergeordnete Zentralrechner ist oben im Bild dargestellt und ist wie ein Cloudspeicher mit entsprechender Intelligenz/Rechenleistung eingerichtet. Ein Beispiel für eine solche Cloud-Lösung ist das VIS.

Benutzer können nun mit ihrem Anzeigegerät auf die Daten in der Cloud zugreifen. Diese Anzeigegeräte sind z. B. zentrale Steuerungssysteme (SPS), Feldanzeigegeräte, wie DIS 82, netzwerkfähige Rechner, aber auch mobile PCs, Tablets, Smartphones oder Wearables. Die Anzeigegeräte sind in der Fig. 6 rechts dargestellt.

Im Folgenden wird die Arbeitsweise des Messsystems bis zum Zeitpunkt T beschrieben. Der Sensor überwacht einen Flusspegel. Dieser Flusspegel ist über einen langen Zeitraum konstant. Der Sensor erkennt, dass der Messwert weitestgehend konstant ist und nicht die Toleranzschwelle überschreitet. Somit reduziert der Sensor die Frequenz der Funkübertragung, um energiesparend zu arbeiten.

In der Cloud wird ebenfalls erkannt, dass sich der Füllstand nach einem bestimmten Muster verändert oder die Cloud erhält vom Sensor dieses Muster übermittelt. Die Cloud schreibt somit seit dem letzten Messwert zum Zeitpunkt (T-1) den Messwert bis zum Zeitpunkt (T) mit dem bekannten Muster fort.

Ein Benutzer, der den Messwert am Anzeigegerät abliest, sieht zum Zeitpunkt zwischen (T-1) und T den mit dem Muster angenäherten Füllstand und ggf. die Messgenauigkeit. Im Folgenden wird die Arbeitsweise ab dem Zeitpunkt (T+1) beschrieben. Bei dem Beispiel der Flusspegelüberwachung steigt der Pegel durch Starkregen nun plötzlich stark an. Der Sensor erkennt, dass der Messwert außerhalb des Toleranzbereiches liegt. Er veranlasst das Funkmodul, den Messwert in die Cloud zu senden.

Mit den weiteren Messungen versucht der Sensor, ein neues Muster zu erkennen und den Toleranzbereich neu festlegen zu können, um die energieintensive Funkübertragung wieder zu reduzieren.

In der Cloud kommt zum Zeitpunkt (T+1) ein neuer aktueller Messwert an. Der Cloudrechner verlässt das bekannte Muster zur Mittelwertberechnung und passt den neuen Mittelwert entsprechend an. Bei einem neuen Messwert zum Zeitpunkt (T+2) versucht der Cloudrechner ein neues Muster zu erkennen und folgt diesem bis zur nächsten Messwertübermittlung.

Der Nutzer erhält bis zum Zeitpunkt T+1 eine angenäherte tatsächliche Messwerthochrechnung. Ab dem Zeitpunkt, ab welchem der Messwert die Toleranz verlässt, erhält der Nutzer möglicherweise eine Warnmeldung. Ab diesem Zeitpunkt T+1 wird auch die Anzeige beim Benutzer angepasst und dieser erhält die immer möglichst genauen Pegelwerte mit maximaler Energiesparfunktion.

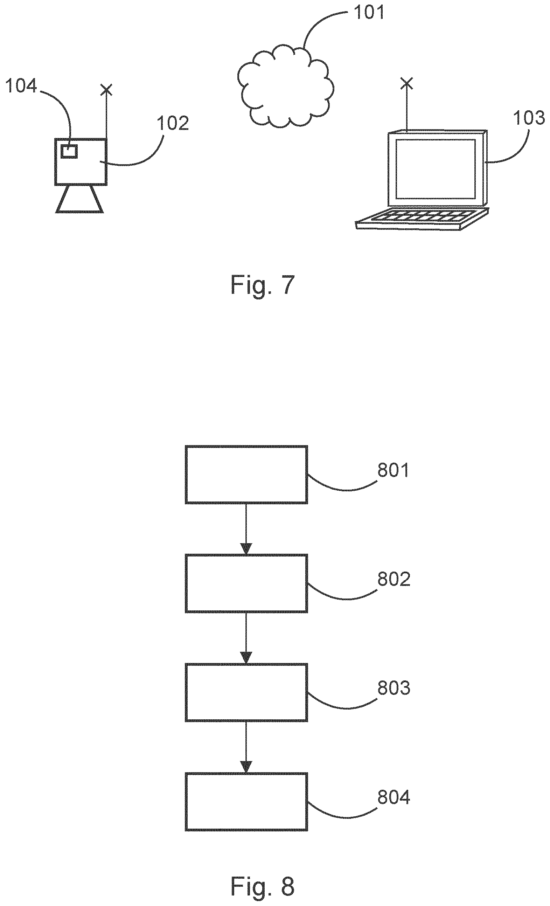

Fig. 7 zeigt eine andere Darstellung des Messsystems. Das Messsystem weist ein Messgerät 102 mit einer Recheneinheit 104 auf. Dieses Messgerät kann mit der Cloud 101 kommunizieren. Weiterhin ist ein externes Anzeige- und/oder Steuergerät 103 vorgesehen, das ebenfalls mit der Cloud kommunizieren kann. Der Schleppzeiger kann sowohl im Messgerät 102 als auch in der Cloud 101 oder, gemäß der Erfindung, in dem benutzerseitigen Endgerät 103 eingebaut sein.

Fig. 8 zeigt ein Flussdiagramm eines Verfahrens gemäß einer Ausführungsform. In Schritt 801 werden Prozessmessdaten durch ein Messgerät erfasst. Eine Recheneinheit, die sich direkt im Messgerät, in der Cloud oder, gemäß der Erfindung, in einem Benutzerendgerät befinden kann, berechnet aus diesen erfassten Prozessmessdaten Prozessmessgrößen und daraufhin aus diesen Prozessmessgrößen eine Näherungsfunktion, die in einer grafischen Darstellung eine stetige Kurve ergibt, die in Form einer Mittelwertbildung sich an die Messwerte annähert (Schritt 802). In Schritt 803 wird nun hieraus ein weiterer Messwert abgeschätzt, indem diese Mittelwertbildung zeitlich weitergeführt wird. In anderen Worten wird ein aktueller Wert der Prozessmessgröße aus der vergangenen zeitlichen Entwicklung der Prozessmessgröße berechnet (nicht aber gemessen).

In Schritt 804 wird nun dieser berechnete, theoretische Wert mit einem aktuellen Messwert verglichen und entschieden, ob ein neuer Messwert übertragen werden muss oder nicht. Ersteres wird dann der Fall sein, wenn die Differenz zwischen dem prognostizierten Messwert und dem tatsächlichen Messwert einen bestimmten Schwellwert übersteigt, und umgekehrt.

Hierdurch kann die Frequenz der Funkübertragung herabgesetzt werden, was zu einer deutlichen Energieeinsparung führt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messgeräteexterne Anzeige- und Auswerteeinheit (103), bei der es sich um einen mobilen PC, ein Tablet, ein Smartphone oder ein Wearable handelt, aufweisend einen Schleppzeiger (103), eingerichtet zum Berechnen einer Prozessmessgröße, aufweisend:
eine Recheneinheit, eingerichtet zum
näherungsweisen Berechnen einer vergangenen zeitlichen Entwicklung des Wertes der Prozessmessgröße aus Prozessmessdaten eines Messgeräts (102);
Berechnen des aktuellen Wertes der Prozessmessgröße aus der vergangenen zeitlichen Entwicklung;
wobei die Recheneinheit eingerichtet ist, den berechneten aktuellen Wert der Prozessmessgröße mit einem aktuellen Wert der Prozessmessgröße zu vergleichen, der auf aktuelle Prozessmessdaten zurückzuführen ist;
wobei die Recheneinheit eingerichtet ist, das Messgerät (102) anzuweisen, Prozessmessdaten an einen externen Empfänger (101) mittels energiesparender Weitbereichskommunikation oder Nahbereichskommunikation zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht;
wobei die Recheneinheit eingerichtet ist, das Messgerät (102) nicht anzuweisen, Prozessmessdaten an den externen Empfänger (101) zu übertragen, wenn der berechnete aktuelle Wert der Prozessmessgröße von dem aktuellen Wert der Prozessmessgröße, der auf die aktuellen Prozessmessdaten zurückzuführen ist, weniger als einen vorbestimmten Schwellwert abweicht.

2. Messgeräteexterne Anzeige- und Auswerteeinheit (103) nach Anspruch 1,
wobei das näherungsweise Berechnen der vergangenen zeitlichen Entwicklung des Wertes der Prozessmessgröße das Erkennen eines Prozessmessgrößen-Musters oder Trends umfasst.

3. Messgeräteexterne Anzeige- und Auswerteeinheit (103) nach einem der vorhergehenden Ansprüche,
wobei das näherungsweise Berechnen der vergangenen zeitlichen Entwicklung des Wertes der Prozessmessgröße das Erzeugen einer mathematischen oder graphischen Beschreibung der vergangenen zeitlichen Entwicklung umfasst.

4. Messgeräteexterne Anzeige- und Auswerteeinheit (103) nach einem der vorhergehenden Ansprüche,
wobei es sich bei der Prozessmessgröße um einen Füllstand eines Behälters oder ein Volumen eines Füllguts handelt.

5. Messgeräteexterne Anzeige- und Auswerteeinheit (103) nach einem der vorhergehenden Ansprüche,
wobei es sich bei den Prozessmessdaten um Füllstandmessdaten eines Füllstandmessgeräts (102) handelt.

6. Messgerät (102), und eine messgeräteexterne Anzeige- und/oder Auswerteeinheit (103) nach einem der vorhergehenden Ansprüche.

7. Verfahren zum Berechnen einer Prozessmessgröße mit einer messgeräteexternen Anzeige- und/oder Auswerteeinheit (103) nach einem der Ansprüche 1 bis 5, aufweisend die folgenden Schritte:
näherungsweises Berechnen einer vergangenen zeitlichen Entwicklung des Wertes der Prozessmessgröße aus Prozessmessdaten eines Messgeräts;
Berechnen des aktuellen Wertes der Prozessmessgröße aus der vergangenen zeitlichen Entwicklung;
Vergleichen des berechneten aktuellen Wertes der Prozessmessgröße mit einem aktuellen Wert der Prozessmessgröße, der auf aktuelle Prozessmessdaten zurückzuführen ist;
Anweisen des Messgerätes (102) durch die Recheneinheit mittels energiesparender Weitbereichskommunikation oder Nahbereichskommunikation, Prozessmessdaten an einen externen Empfänger (101) zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht;
wobei die Recheneinheit eingerichtet ist, das Messgerät (102) nicht anzuweisen, Prozessmessdaten an einen externen Empfänger (101) zu übertragen, wenn der berechnete aktuelle Wert der Prozessmessgröße von dem aktuellen Wert der Prozessmessgröße, der auf die aktuellen Prozessmessdaten zurückzuführen ist, weniger als einen vorbestimmten Schwellwert abweicht.

8. Programmelement, das, wenn es auf der Recheneinheit einer messgeräteexternen Anzeige- und/oder Auswerteeinheit (103) nach einem der Ansprüche 1 bis 5 ausgeführt wird, die Recheneinheit anweist, die folgenden Schritte durchzuführen:
näherungsweises Berechnen einer vergangenen zeitlichen Entwicklung des Wertes der Prozessmessgröße aus Prozessmessdaten eines Messgeräts;
Berechnen des aktuellen Wertes der Prozessmessgröße aus der vergangenen zeitlichen Entwicklung;
Vergleichen des berechneten aktuellen Wertes der Prozessmessgröße mit einem aktuellen Wert der Prozessmessgröße, der auf aktuelle Prozessmessdaten zurückzuführen ist;
Anweisen des Messgerätes (102) durch die Recheneinheit, Prozessmessdaten an einen externen Empfänger (101)
zu übertragen, wenn der berechnete aktuelle Wert der Prozessmessgröße von dem aktuellen Wert der Prozessmessgröße, der auf die aktuellen Prozessmessdaten zurückzuführen ist, mehr als einen vorbestimmten Schwellwert abweicht;
wobei die Recheneinheit eingerichtet ist, das Messgerät (102) nicht anzuweisen, Prozessmessdaten an einen externen Empfänger (101) zu übertragen, wenn der berechnete aktuelle Wert der Prozessmessgröße von dem aktuellen Wert der Prozessmessgröße, der auf die aktuellen Prozessmessdaten zurückzuführen ist, weniger als einen vorbestimmten Schwellwert abweicht.

9. Computerlesbares Medium, auf dem ein Programmelement nach Anspruch 8 gespeichert ist.

## Claims

1. Measuring-device-external display and evaluation unit (103), which is a mobile PC, a tablet, a smartphone or a wearable, comprising a slave pointer (103), configured to calculate a process variable, comprising:
a computing unit, configured to
approximately calculate a past temporal progression of the value of the process variable from process measurement data of a measuring device (102);
calculate the current value of the process variable from the past temporal progression;
wherein the computing unit is further configured to compare the calculated current value of the process variable with a current value of the process variable derived from current process measurement data;
wherein the computing unit is further configured to instruct the measuring device (102) to transmit process measurement data to an external receiver (101) via energy-efficient long-range communication or short-range communication when the calculated current value deviates from the current value derived from current process measurement data by more than a predetermined threshold value;
wherein the computing unit is arranged not to instruct the measuring device (102) to transmit process measurement data to the external receiver (101) if the calculated current value of the process measurement variable deviates from the current value of the process measurement variable, which is attributable to the current process measurement data, by less than a predetermined threshold value;
wherein the computing unit is further configured not to instruct the measuring device (102) to transmit process measurement data to the external receiver (101) when the calculated current value deviates from the current value derived from current process measurement data by less than the predetermined threshold value.

2. Measuring-device-external display and evaluation unit (103) according to claim 1,
wherein the approximate calculation of the past temporal progression of the value of the process variable comprises detecting a process variable pattern or trend.

3. Measuring-device-external display and evaluation unit (103) according to one of the preceding claims,
wherein the approximate calculation of the past temporal progression of the value of the process variable comprises generating a mathematical or graphical representation of the past temporal progression.

4. Measuring-device-external display and evaluation unit (103) according to one of the preceding claims,
where the process variable is a fill level of a container or a volume of a filling material.

5. Measuring-device-external display and evaluation unit (103) according to one of the preceding claims,
wherein the process measurement data are fill level measurement data of a fill level measuring device (102).

6. Measuring device (102), and a measuring-device-external display and/or evaluation unit (103) according to one of the preceding claims.

7. Method for calculating a process variable using a measuring-device-external display and/or evaluation unit according to one of claims 1 to 5, comprising the following steps:
approximately calculating a past temporal progression of the value of the process variable from process measurement data of a measuring device;
calculating the current value of the process variable from the past temporal progression;
comparing the calculated current value of the process variable with a current value derived from current process measurement data;
instructing the measuring device (102), via the computing unit and by means of energy-efficient long-range or short-range communication, to transmit process measurement data to an external receiver (101) when the calculated current value deviates from the value derived from current process measurement data by more than a predetermined threshold value;
wherein the computing unit is configured not to instruct the measuring device (102) to transmit process measurement data to the external receiver (101) when the deviation is less than the predetermined threshold value.

8. Program element which, when executed on the computing unit of a measuring-device-external display and/or evaluation unit according to any one of claims 1 to 5, instructs the computing unit to perform the following steps:
approximately calculating a past temporal progression of the value of the process variable from process measurement data of a measuring device;
calculating the current value of the process variable from the past temporal progression;
comparing the calculated current value of the process variable with a current value derived from current process measurement data;
instructing the measuring device (102) to transmit process measurement data to an external receiver (101) when the calculated current value deviates from the value derived from current process measurement data by more than a predetermined threshold value;
wherein the computing unit is configured not to instruct the measuring device (102) to transmit process measurement data to the external receiver (101) when the deviation is less than the predetermined threshold value.

9. Computer-readable medium on which a program element according to claim 8 is stored.

## Revendications

1. Unité d'affichage et d'évaluation externe à un appareil de mesure (103), qui peut être un PC mobile, une tablette, un smartphone ou un appareil portable, présentant une aiguille suiveuse (103), conçue pour calculer une grandeur de mesure de processus, présentant :
une unité de calcul conçue pour
calculer de manière approximative une évolution temporelle passée de la valeur de la grandeur de mesure de processus à partir de données de mesure de processus d'un appareil de mesure (102) ;
calculer la valeur actuelle de la grandeur de mesure de processus à partir de l'évolution temporelle passée ;
l'unité de calcul étant conçue pour comparer la valeur actuelle calculée de la grandeur de mesure de processus avec une valeur actuelle de la grandeur de mesure de processus qui est attribuable à des données de mesure de processus actuelles ;
l'unité de calcul étant conçue pour ordonner à l'appareil de mesure (102) de transmettre des données de mesure de processus à un récepteur externe (101) au moyen d'une communication en champ lointain à faible consommation d'énergie ou d'une communication en champ proche lorsque la valeur actuelle calculée de la grandeur de mesure de processus s'écarte de plus d'une valeur seuil prédéterminée de la valeur actuelle de la grandeur de mesure de processus qui est attribuable aux données de mesure de processus actuelles ;
l'unité de calcul étant configurée pour ne pas ordonner à l'appareil de mesure (102) de transmettre des données de mesure de processus au récepteur externe (101) lorsque la valeur actuelle calculée de la grandeur de mesure de processus s'écarte de moins d'une valeur seuil prédéterminée de la valeur actuelle de la grandeur de mesure de processus qui est attribuable aux données de mesure de processus actuelles.

2. Unité d'affichage et d'évaluation externe à un appareil de mesure (103) selon la revendication 1,
dans laquelle le calcul approximatif de l'évolution temporelle passée de la valeur de la grandeur de mesure de processus comprend la reconnaissance d'un motif ou d'une tendance de la grandeur de mesure de processus.

3. Unité d'affichage et d'évaluation externe à un appareil de mesure (103) selon l'une des revendications précédentes,
dans laquelle le calcul approximatif de l'évolution temporelle passée de la valeur de la grandeur de mesure de processus comprend la génération d'une description mathématique ou graphique de l'évolution temporelle passée.

4. Unité d'affichage et d'évaluation externe à un appareil de mesure (103) selon l'une des revendications précédentes,
dans laquelle la grandeur de mesure de processus est un niveau de remplissage d'un récipient ou un volume d'un produit de remplissage.

5. Unité d'affichage et d'évaluation externe à un appareil de mesure (103) selon l'une des revendications précédentes,
dans laquelle les données de mesure de processus sont des données de mesure de niveau de remplissage d'un appareil de mesure de niveau de remplissage (102).

6. Appareil de mesure (102) et unité d'affichage et/ou d'évaluation externe à l'appareil de mesure (103) selon l'une des revendications précédentes.

7. Procédé de calcul d'une grandeur de mesure de processus avec une unité d'affichage et/ou d'évaluation externe à un appareil de mesure (103) selon l'une des revendications 1 à 5, comprenant les étapes consistant à :
calculer de manière approximative une évolution temporelle passée de la valeur de la grandeur de mesure de processus à partir de données de mesure de processus d'un appareil de mesure ;
calculer la valeur actuelle de la grandeur de mesure de processus à partir de l'évolution temporelle passée ;
comparer la valeur actuelle calculée de la grandeur de mesure de processus avec une valeur actuelle de la grandeur de mesure de processus qui est attribuable à des données de mesure de processus actuelles ;
ordonner à l'appareil de mesure (102), par l'unité de calcul, au moyen d'une communication en champ lointain à faible consommation d'énergie ou d'une communication en champ proche, de transmettre des données de mesure de processus à un récepteur externe (101) lorsque la valeur actuelle calculée de la grandeur de mesure de processus s'écarte de plus d'une valeur seuil prédéterminée de la valeur actuelle de la grandeur de mesure de processus qui est attribuable aux données de mesure de processus actuelles ;
dans lequel l'unité de calcul est conçue pour ne pas ordonner à l'appareil de mesure (102) de transmettre des données de mesure de processus à un récepteur externe (101) lorsque la valeur actuelle calculée de la grandeur de mesure de processus s'écarte de moins d'une valeur seuil prédéterminée de la valeur actuelle de la grandeur de mesure de processus qui est attribuable aux données de mesure de processus actuelles.

8. Élément de programme qui, lorsqu'il est exécuté sur l'unité de calcul d'une unité d'affichage et/ou d'évaluation (103) externe à un appareil de mesure selon l'une des revendications 1 à 5, ordonne à l'unité de calcul de mettre en œuvre les étapes consistant à :
calculer de manière approximative une évolution temporelle passée de la valeur de la grandeur de mesure de processus à partir de données de mesure de processus d'un appareil de mesure ;
calculer la valeur actuelle de la grandeur de mesure de processus à partir de l'évolution temporelle passée ;
comparer la valeur actuelle calculée de la grandeur de mesure de processus avec une valeur actuelle de la grandeur de mesure de processus qui est attribuable à des données de mesure de processus actuelles ;
ordonner à l'appareil de mesure (102), par l'unité de calcul, de transmettre des données de mesure de processus à un récepteur externe (101) lorsque la valeur actuelle calculée de la grandeur de mesure de processus s'écarte de plus d'une valeur seuil prédéterminée de la valeur actuelle de la grandeur de mesure de processus qui est attribuable aux données de mesure de processus actuelles ;
dans lequel l'unité de calcul est conçue pour ne pas ordonner à l'appareil de mesure (102) de transmettre des données de mesure de processus à un récepteur externe (101) lorsque la valeur actuelle calculée de la grandeur de mesure de processus s'écarte de moins d'une valeur seuil prédéterminée de la valeur actuelle de la grandeur de mesure de processus qui est attribuable aux données de mesure de processus actuelles.

9. Support lisible par ordinateur sur lequel est stocké un élément de programme selon la revendication 8.
